# EUROPEAN PATENT SPECIFICATION

(11) **EP 2 496 479 B1**
(45) Date of publication and mention of the grant of the patent: **25.03.2015**
(21) Application number: 10809042.4
(22) Date of filing: 04.11.2010
(51) Int. Cl.: B65B 7/16

(54) **APPARATUS AND METHOD FOR WELDING**
SCHWEISSVORRICHTUNG UND SCHWEISSVERFAHREN
APPAREIL ET PROCEDE POUR SOUDAGE

(30) Priority: 04.11.2009 IT MO20090268
(43) Date of publication of application: 12.09.2012
(73) Proprietor: Sarong Societa' Per Azioni, 42046 Reggiolo (RE) (IT)
(72) Inventor: BARTOLI, Andrea, 42100 Reggio Emilia (RE) (IT); TRALDI, Flavio, 41030 San Prospero (MO) (IT); CAVAZZOLI, Gianni, 41030 San Prospero (MO) (IT)
(74) Representative: Crugnola, Pietro
(86) International application number: PCT/IB2010/055005
(87) International publication number: WO 2011/055325

(56) References cited:
- EP-A1- 0 347 825
- EP-A2- 1 908 689
- US-A- 3 709 702

## Description

The invention relates to apparatuses and methods for welding, and in particular refers to a welding apparatus that is associable with a packaging forming machine for welding a covering film to a sheet of thermoformable plastic material, and a corresponding welding method.

Packaging machines are known, so-called thermoforming machines, that form containers by thermoforming a sheet of plastics, fill the containers thus formed with a product and hermetically close the containers with a covering film.

Known thermoforming machines generally comprise, arranged in succession, a heating station, in which the sheet of thermoformable material is heated to a softening temperature, a thermoforming station where the sheet is thermoformed by a punch interacting with a die so as to form the containers, a filling station that fills with a product a cavity of the containers that have just been formed, a coupling station in which the covering film, unwound from a respective reel, is extended on the sheet so as to close the containers, and a welding station, where the film is welded superimposed on the sheet around the openings of each container, such as to seal the product that has just been dosed and form in this manner a hermetically closed container.

The thermoforming machine may further comprise a shearing station that shears the sealed containers individually or in groups, separating them from what remains of the sheet and of the film.

The known welding apparatuses used in the welding stations of the thermoforming machines, comprise a first plate provided with cavities shaped for receiving the containers thermoformed on the continuous sheet of thermoformable plastic material and filled with a product, and a second plate provided with welding elements for heating and welding preset portions of the covering film, for example a film of aluminium, to the aforesaid sheet of plastic material.

Known welding apparatuses further comprise a locking element, a so-called bell, arranged for locking the covering film to the sheet of plastic material at side zones that surround an operating zone of the sheet comprising the containers to be closed.

The operation of known welding apparatuses provides moving vertically the first plate from a lowered position to a raised position in which the cavities of the first plate receive the containers previously thermoformed in the sheet of plastic material. The sheet of plastic material and the covering film are advanced facing and superimposed one another through the two plates of the welding apparatus with an indexed motion.

Once the sheet is positioned in such a manner that each container is received inside a respective cavity of the first plate, the bell is lowered to lock the covering film on the sheet peripherally with respect to the operating zone, i.e. at a zone that surrounds the cavities and the containers. At the same time the air in the containers and the air interposed between the film and the sheet is sucked by devices positioned near the side edges of the sheet.

It is optionally possible, immediately after sucking the air, to introduce or blow in a gas, typically an inert gas such as nitrogen, into the containers so that the gas replaces the air. The inert gas is generally introduced by the same devices that previously sucked the air.

Subsequently, the second plate is lowered so as to contact the covering film by the welding elements that, suitably heated, yield heat through contact to portions of the covering film that surround openings of the containers in such a manner as to weld, at such portions, the sheet to the film and seal the product contained inside the containers. The step of sucking the air is very important inasmuch as the presence of air inside the containers could over time damage the organoleptic features of the product contained in the container.

On the other hand, to prevent containers being obtained with an unpleasant aesthetic appearance in which the covering film is sucked inwards the container due to the vacuum inside the container, it is opportune to introduce inert gas instead of air into the containers so that the organoleptic features of the product remain unchanged, but at the same time the product is not vacuum-packed.

In order to ensure that sucking air from the containers is effective, it is important for the sucking and/or blowing devices to act correctly on the entire extent of the side edges of the sheet.

A drawback of known welding apparatuses is that they do not ensure effective sucking of the air from inside the containers. This is in particular due to the lateral sucking of the air. The air is in fact generally sucked easily from the containers located near the devices that suck air but is sucked with greater difficulty, for example in an incomplete manner, from the containers that are further from the aforesaid devices, i.e. from the containers arranged more centrally in the sheet and thus further from the edges of the sheet.

Further, although the covering film is not yet joined to the sheet of thermoformable material, the film and the sheet are substantially superimposed, the film being expended on the sheet. This arrangement does not ensure the presence at all points of a suitable gap or passage between the film and the sheet through which the air can pass to exit from the containers to the exterior. On the other hand, the greater the path that the air has to travel to reach the side zones in which suction occurs, the greater the probability that not all the air is sucked. A great sucking force is thus required to obtain acceptable sucking of the air from between the covering film and the sheet of plastic material.

For the same reason, the inert gas blown by the side edges of the sheet to the central parts is not always able to reach all the containers and a large part of the gas exits the sheet, being released in the surrounding environment.

Another drawback of the known welding apparatuses is thus due to the high energy consumption required to suck air by the side edges of the sheet and the large consumption of inert gas blown between the film and the sheet.

A further drawback of known welding apparatuses is that the air is sucked by dedicated devices that can make the welding apparatus more complex. In fact, these devices, which have to be positioned laterally with respect to the operating zone, can cause greater overall dimension and greater structural complexity of the welding apparatus. US 3 709 702 discloses an apparatus for welding a covering film to a container, having extendable means to support the film a part from the container to allow gas to be sucked from or added to the container.

An object of the invention is to improve welding apparatuses for welding a covering film to a sheet of thermoformable plastic material, in particular in a packaging forming machine.

A further object is to provide a welding apparatus that is able to suck air from and blow a gas inside containers thermoformed in the sheet of thermoformable material, in a complete and effective manner.

Another object is to provide a welding apparatus that is constructionally and functionally simple and has limited overall dimensions.

Still another object is to provide a method for welding a covering film to a sheet of thermoformable plastic material that ensures almost complete sucking of air from inside the thermoformed containers and/or optimal leading of the gas, reducing the consumption of the gas.

In a first aspect of the invention, an apparatus is provided as defined in claim 1.

In a second aspect of the invention, a welding method is provided as defined in claim 13.

The invention can be better understood and implemented with reference to the attached drawings that illustrate an embodiment thereof by way of non-limiting example, in which:
Figure 1 is a partial front view of the welding apparatus according to the invention in an open configuration with a sheet of thermoformable plastic material provided with containers and with a covering film;
Figure 2 is a front perspective partial view of the apparatus in Figure 1 devoid of the sheet and the film;
Figure 3 is a partial rear perspective view of the apparatus in Figure 1 devoid of the sheet and the film;
Figure 4 is a section according to the line IV-IV in Figure 1;
Figure 5 is a section according to the line V-V in Figure 1;
Figure 6 is a partial enlarged view of Figure 4, showing supporting means in an extended position;
Figure 7 is a section like that one in Figure 4 showing the welding apparatus in a first operating configuration;
Figure 8 is an enlarged partial view of Figure 7, showing the supporting means in the extended position;
Figure 9 is a section like that one in Figure 4 showing the welding apparatus in a second operating configuration;
Figure 10 is an enlarged detail of Figure 9, showing the supporting means in a retracted position;
Figure 11 is a perspective view of plate means of the apparatus in Figure 1 in association with the sheet of thermoformable plastic material.

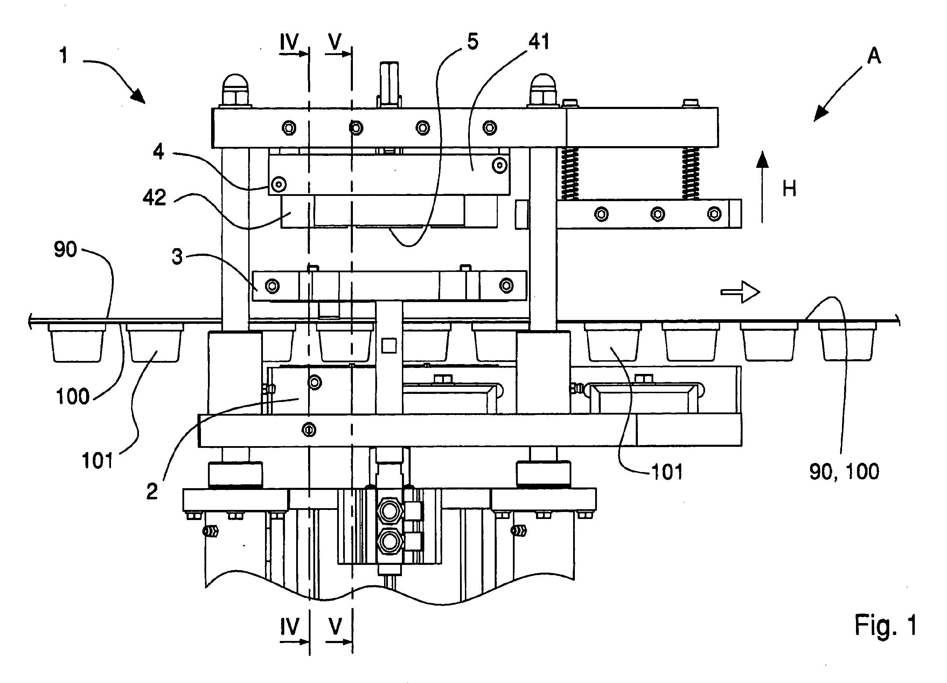

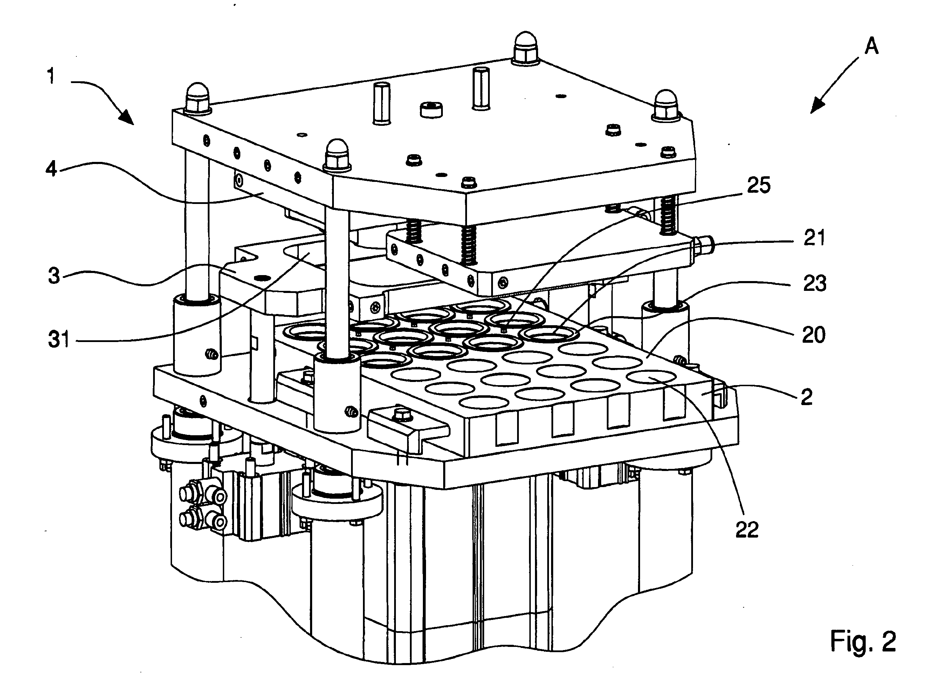

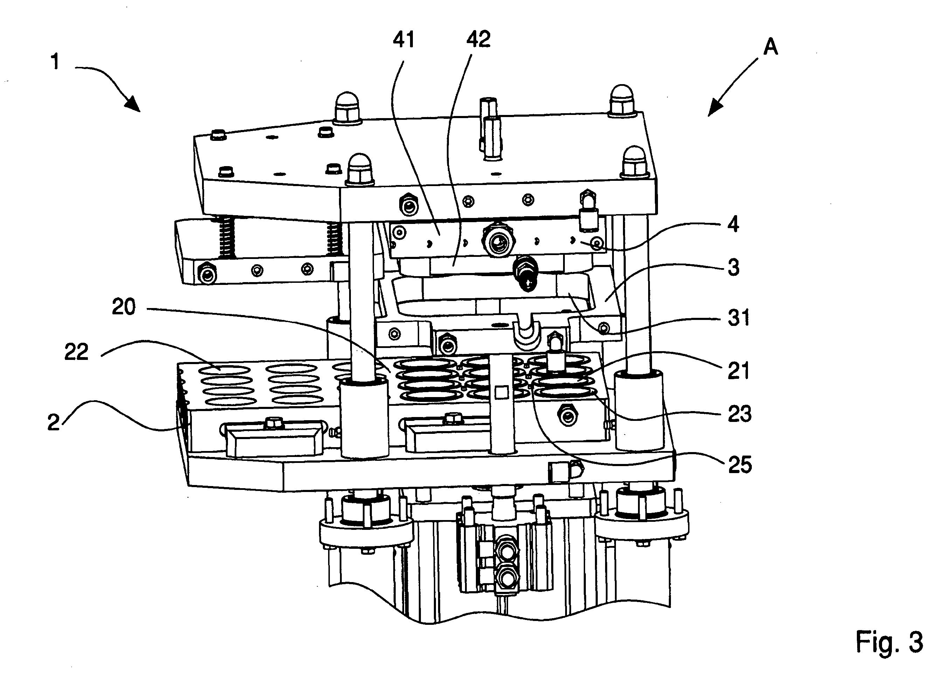

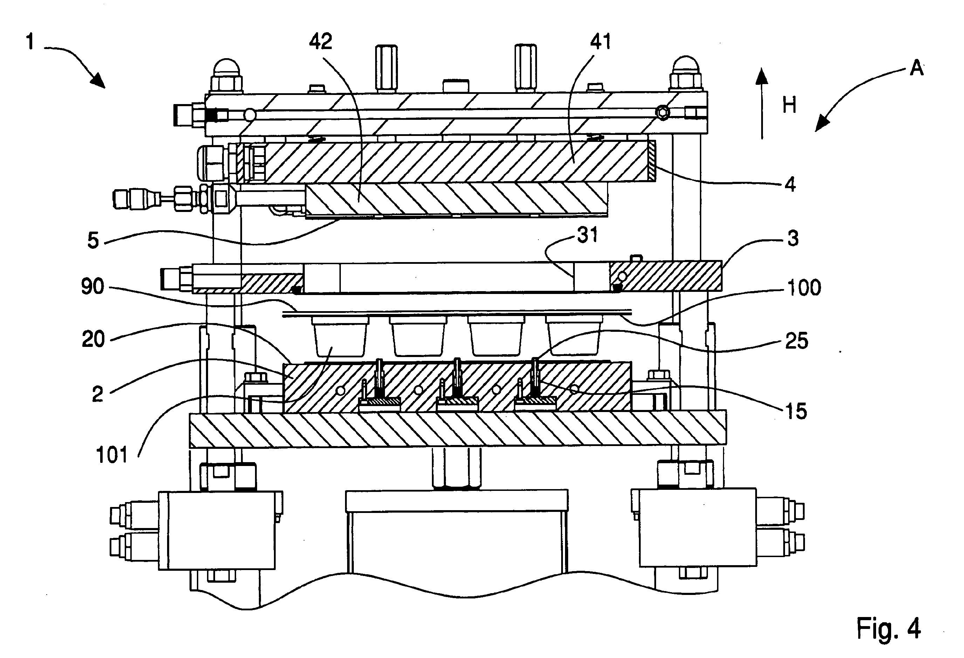

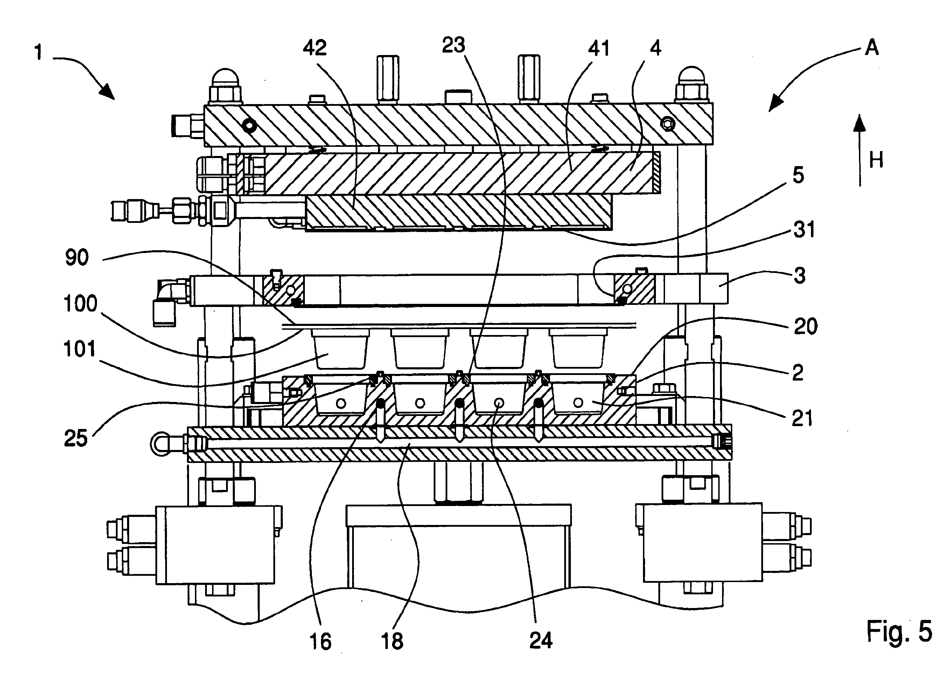

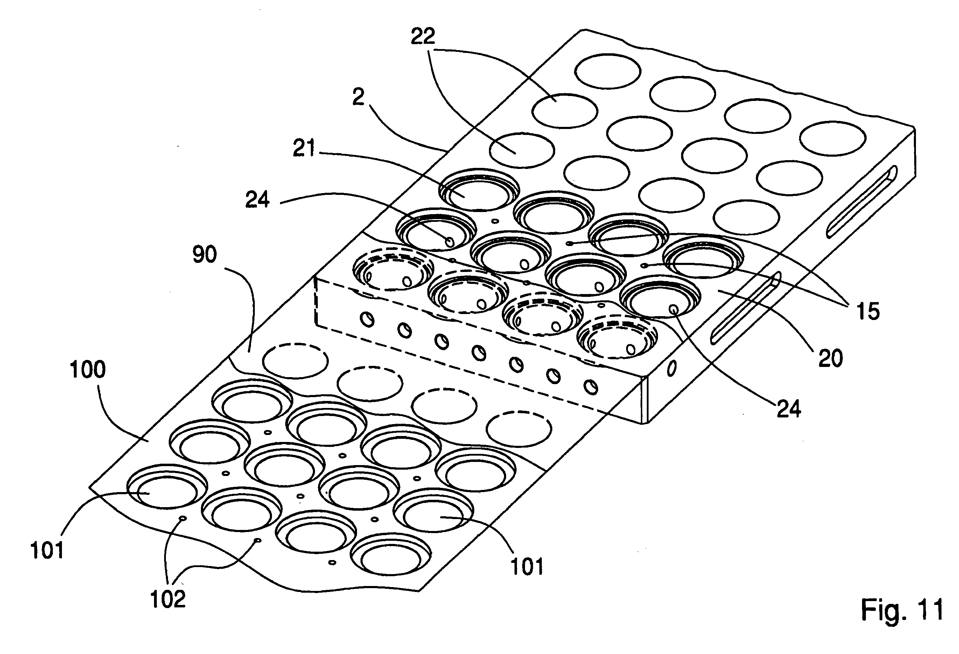

With reference to Figures 1 to 11 there is shown an apparatus 1 for welding a covering film 90, for example made of aluminium or similar material, to a sheet 100 of thermoformable plastic material. In particular, the apparatus 1, which is associable with a packaging forming machine of known type and not illustrated in the figures, enables a plurality of containers 101 that are obtained by thermoforming of the sheet 100 and are subsequently filled with a product, for example a food product, to be closed and sealed with the film 90.

The apparatus 1 comprises first plate means 2 provided with cavities 21, 22 to house respective containers 101 of the sheet 100, locking means 3 for locking substantially in a sealed manner the covering film 90 on the sheet 100 of plastic material against the first plate means 2, and second plate means 4 provided with welding means 5 for welding together portions of the covering film 90 and of the sheet 100 of plastic material.

The first plate means 2, the second plate means 4 and the locking means 3 are mutually movable along an operating direction H that is substantially orthogonal to the sheet 100 between different operating configurations, as disclosed in greater detail further on in the description.

The first plate means 2, the second plate means 4 and the locking means 3 are driven by respective driving means, for example pneumatic linear actuators, of known type and non-illustrated.

The sheet 100 and the film 90 facing one another and substantially superimposed are advanced with an indexed motion by advancement means of the machine that are known and are not illustrated in the figures through the welding apparatus 1. In particular, as illustrated in Figure 1, the sheet 100 and the film 90 are interposed between the first plate means 2 and the locking means 3.

The first plate means 2 comprises a first plate element, for example of substantially rectangular shape, provided with an almost flat operating wall 20, in which cavities 21 are obtained.

The cavities 21 are arranged, for example, aligned along mutually parallel rows which extend along two substantially orthogonal directions.

The arrangement of the cavities 21 correspond to the arrangement of the containers 101 formed on the sheet 100 as each cavity 21 is intended to receive a respective container 101 in an operating condition of the welding apparatus 1. In the shown embodiment the cavities 21 and the containers 101 have a substantially frustoconical shape.

The first plate means 2 further comprises further cavities 22 that have the same arrangement and number of cavities 21 and are arranged adjacent to the latter in an advancement direction of the sheet 100.

The further cavities 22 are intended for receiving in the operating condition of the welding apparatus 1 containers 101 that are already sealed by the covering film 90 so as to ensure correct positioning of the sheet 100, i.e. of the containers 101 in the cavities 21.

Each cavity 21 is provided, at its opening, with an abutting element 23, for example a seal of elastic material, that cooperates with the welding means 5 of the second plate means 4 for welding together the sheet 100 and the film 90.

A vent hole 24 connected with the external environment is provided on a side wall of each cavity 21. In particular, the vent holes 24 of the cavities 21 are connected together and connected to the external environment by valve means of known type that is not illustrated. The valve means is switchable between an open and a closed position respectively to enable or prevent the connection of the vent holes 24 with the external environment.

The first plate 2 further comprises a plurality of conduits 15 that place the operating wall 20 of the first plate 2 in flowing communication with air sucking means and/or gas blowing means of known type that is not illustrated in the figures. The conduits 15 are regularly distributed on the plates 2 and lead into respective through holes 102 interposed between said containers 101. The through holes 102 are previously made on the sheet 100, for example in a shearing station of the machine or in the same forming station that is provided, for this purpose, with shearing means.

The conduits 15 slidably house supporting means 25 that is shaped so as to enable air to flow through the respective conduit 15 and is movable between two distinct operating positions disclosed in greater detail further on in the description.

Each conduit 15, for example of cylindrical shape and substantially orthogonal to the operating wall 20, leads onto the operating wall 20 and is flowingly connected to the sucking and/or blowing means by a transverse connecting hole 16. On a side opposite the operating wall 20 the conduit 15 further leads onto a chamber 17, for example of cylindrical shape. The conduit 15 is sealed below by a cap 27 positioned in the chamber 17 and fixed to the first plate 2 by threaded means 28.

The connecting holes 16 of the conduits interlinked together and connected to the sucking and/or blowing means by means of a main conduit 18 made in the first plate 2.

In the conduits 15 the supporting means 25 are slidably housed that comprises, for example, pins.

The pins 25 are maintained with respective operating ends 25a protruding from the conduits 15 and from the operating wall 20 by elastic means 26.

Narrowing 15a of the section of the conduit 15, at the operating wall 20, is provided for abutting on a shoulder 25b of the respective pin 25 so as to prevent the pin 25 from exiting the conduit 15.

The pins 25 have a cross section that is shaped in such a manner as to make inside the respective conduits 15 one or more passages for the air and/or the gas. The pins 25 have, for example, a cross section that is substantially shaped as a cross.

In other embodiments of the invention, which are not shown, the pins 25 can have a cross section shaped in any other shape, for example square, hexagonal, etc, provided that this cross section makes in the conduits 15 suitable passages for air and/or gas.

In still other embodiments, the pins can have a solid cross section, for example a cylindrical cross section, and comprise longitudinal grooves to enable the passage of the air and/or of the gas.

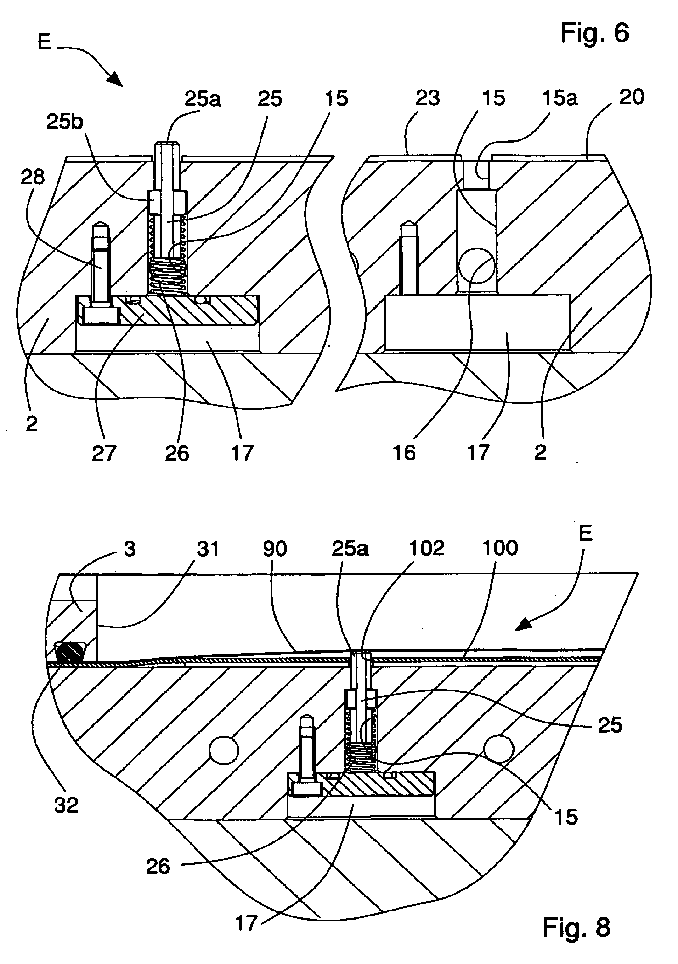

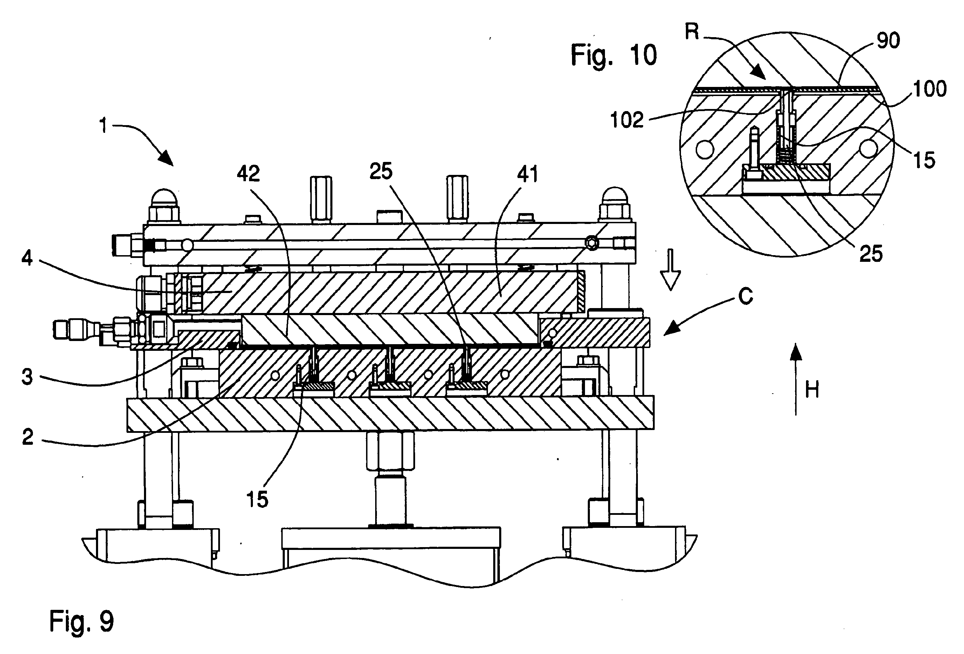

The pins 25 are movable substantially vertically, between an extended position E (better visible in the enlarged views of Figures 6 and 8), in which they protrude above the operating wall 20, and a retracted position R (better visible in the enlarged detail in Figure 10), in which they are housed substantially inside the respective conduits 15.

In the extended position E the pins 25 pass through the through holes 102 of the sheet 100 and abut on and support the covering film 90, maintaining the covering film 90 spaced away from the sheet 100 to permit optimal extraction of the air and/or leading of the gas.

In the retracted position R the pins 25 are pushed inside respective conduits 15 by the second plate means 4 in order not to interfere with the operation of the welding means 5. Each pin 25 is maintained in the extended position E by respective elastic means 26 acting on the shoulder 25b and comprising, for example, a helical spring pushed inside the conduit 15 compressed on the pin 25 by the cap 27.

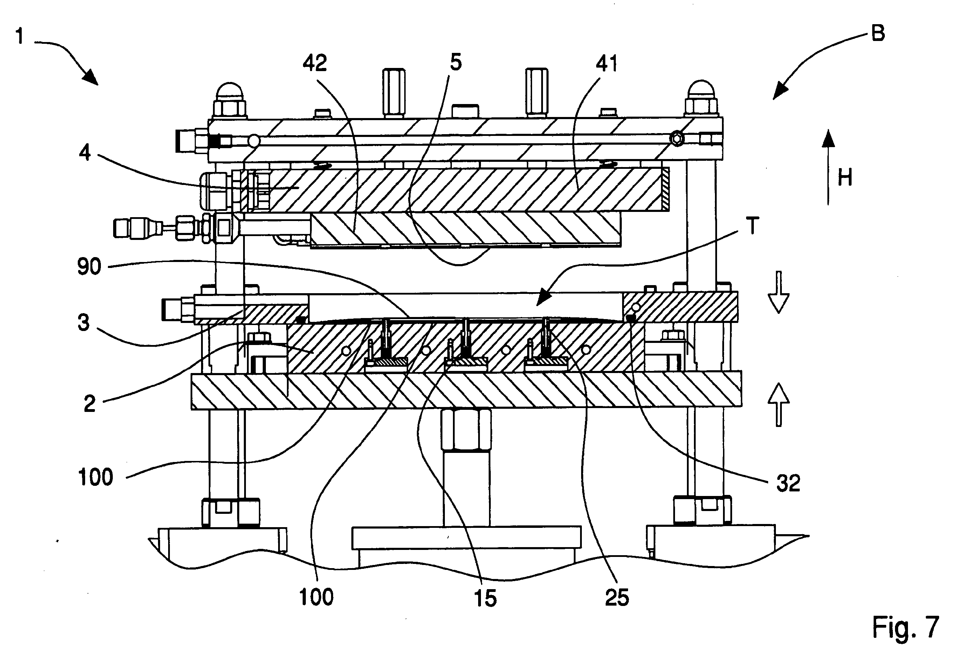

The locking means 3 comprises an annular element known as a 'bell', having a substantially rectangular shape, provided with a central opening 31 and arranged for abutting on the first plate 2 and for locking substantially sealingly the covering film 90 on the sheet 100 along a peripheral portion, that encloses an operating zone T (Figure 7) of the sheet 100 that comprises the plurality of containers 101 to be closed. For this purpose, the locking means 3 is provided with sealing means 32 (which is better visible in the enlarged view in Figure 8), comprising for example an O-ring seal, arranged around the central opening 31 and arranged for abutting on the film 90.

The second plate means 4 comprises a first supporting element 41, for example of substantially rectangular shape, to which a welding plate 42 is fixed having a shape that is complementary to that of the central opening 31 of the locking means 3. The welding plate 42 includes the welding means 5 comprising a plurality of annular ridges heated internally, for example by means of electric resistances, that are of known type and not illustrated.

The annular ridges of the welding means 5 are shaped in such a manner as to abut on the abutting elements 23 of the first plate 2 and to make welds between the sheet 100 and film 90 having a desired shape, for example an annular shape, and desired dimension around the openings of the containers 101.

The operation of the welding apparatus 1 has a first step in which the first plate means 2, the locking means 3 and the second plate means 4 are in an open configuration A (Figures 1 to 5) mutually spaced apart from one another to advance jointly the sheet of plastic material 100 and the covering film 90 in a defined welding position in which the containers 101 of the sheet 100 substantially face the cavities 21 of the first plate 2.

Subsequently, the first plate means 2 and the locking means 3 are moved towards one another in opposite directions along the operating direction H so as to clamp the sheet 100 and the film 90, in a first operating configuration B, along a peripheral edge that surrounds the operating zone T comprising the containers 101 to be welded.

In this first operating configuration B, as illustrated in detail in Figures 7 and 8, the pins 25 exiting with the respective operating ends 25a from the respective conduits 25, maintain the film 90 spaced away from the sheet 100 in the entire operating zone T, substantially defining a gap or passage of preset height. In this manner, through the conduits 15, which are only partially occluded by the respective pins 25, and the through holes 102 of the sheet 100 it is possible to extract the air contained inside the containers 21 and more in general between the sheet 100 and the film 90.

In this step, the vent holes 24 of the cavities 21 are isolated from the external environment, by suitably switching the valve means to the closed position so as to prevent air being sucked in from the exterior.

It should be noted that by virtue of the uniform arrangement of the conduits 15 on the first plate 2 - and of the through holes 102 - it is possible to ensure an optimal extraction of the air without any need to have particularly powerful sucking means. In fact, no connection between conduits 15 and the external environment is possible by virtue of the seal made on the first plate 2 by the locking means 3.

After sucking of the air has terminated, for example after a preset suction time, it is possible to lead a gas inside the containers 101 by means of the same conduits 15, in particular an inert gas such as nitrogen, to ensure the integrity of the product. For this purpose, the sucking means may comprise a switching valve and gas-blowing means.

During leading of gas, after a preset blowing time that ensures saturation with this gas of the containers 101 and of the space comprised between the sheet 100 and the film 90, the second plate means 4 is moved downwards along the operating direction H until it abuts, with the welding means 5, on the film 90 compressed on the sheet 100 in a second operating configuration C (Figure 9).

The pins 25, by virtue of the elastic means 26 when they are progressively abutted on by the second plate means 4, slide elastically inside the respective conduits 15 in order not to interfere and to enable the film 90 to adhere to the sheet 100 in all points, and in particular in the portions comprised between adjacent containers 101.

Substantially simultaneously with the abutment between the plate means 2, 4 the leading of gas is interrupted to avoid the gas being wasted as the containers 21 are already hermetically closed by the film 90.

After a defined welding time, the first plate means 2, the locking means 3 and the second plate means 4 are brought again to the open configuration A to enable the containers 101 closed by the film 90 to be removed from the cavities 21 of the first plate 2.

For this purpose, the vent holes 24 of the cavities 21 are placed in connection with the external environment by suitably switching the valve means.

Owing to the welding apparatus of the invention it is thus possible to extract in an optimal manner the air contained inside the containers 101 filled with the product and in the spaced interposed between the sheet of plastic material 100 and the covering film 90. The supporting means 25 thus maintains the film 90 and sheet 100 suitably spaced apart, whilst the arrangement and distribution of the conduits 15 and of the through holes 102 of the sheet 100 ensures that the air is sucked evenly in all the points of the operating zone T, also in those more central.

This enables the residual air content in the containers 101 to be minimised and sucking means of limited power and capacity to be used, i.e. that is cheap also in use thanks to the lesser energy consumption.

Similarly, in the case of leading of a gas after sucking the air, the apparatus of the invention enables the containers 101 to be saturated rapidly and optimally with the gas, regardless of their position in the operating zone T, simultaneously reducing gas consumption, also by virtue of the virtual absence of dispersion and leaks.

It should also be noted that the conduits 15 through which the air is sucked and/or the gas is blown are obtained inside the plate means 2 and no longer laterally with respect to the operating zone T, so as to reduce the overall lateral dimensions of the apparatus 1 and the structural complexity thereof. Further, it should be noted that the conduits 15 lead onto the operating wall 20 in such a manner as to face the through holes 102 obtained on the sheet 100 at regions of the sheet 100 that are interposed between the containers 101 that at the subsequent shearing station of the thermoforming machine are intended to become scrap material. Thus, in the welding apparatus 1, it is possible to suck air from and/or blow a gas into the containers 101 in a complete and effective manner by exploiting regions of the sheet 100 that are very near the containers 101 but which would be unused. Variations and/or additions to what has been disclosed above and/or shown in the attached drawings are further possible.

## Claims

1. Apparatus for welding a covering film (90) superimposed on a sheet (100) made of thermoformable plastic material provided with a plurality of containers (101) thermoformed on said sheet (100), comprising first plate means (2) provided with an operating wall (20) for supporting said sheet (100) and second plate means (4) provided with welding means (5) for pressing said film (90) and said sheet (100) against said operating wall (20) such as to weld said film (90) to said sheet (100), said sheet (100) comprising a plurality of through holes (102) interposed between said containers (101), said first plate means (2) comprising conduit means (5) leading onto said operating wall (20) at said through holes (102) for sucking air from and/or leading a gas to, said containers (101), wherein the apparatus further comprises supporting means (25) associated with said first plate means (2) and movable between an extended position (E), in which said supporting means (25) protrudes from said operating wall (20) so as to support said film (90) and maintain said film (90) spaced apart from said sheet (100) to facilitate sucking of air from and/or leading a gas to said containers (101), and a retracted position (R), in which said supporting means (25) is substantially housed inside said first plate means (2) so as to enable said first plate means (2) and said second plate means (4) to press and weld together said film (90) and said sheet (100), and wherein it further comprises locking means (3) interposed between said first plate means (2) and said second plate means (4) and arranged for locking said film (90) to said sheet (100), in a first operating configuration (B), along a peripheral portion bounding an operating zone (T) of said sheet (100) comprising said containers (101).

2. Apparatus according to claim 1, wherein said locking means (3) is provided with sealing means (32) arranged for abutting on said film (90).

3. Apparatus according to claim 1 or 2, wherein said supporting means (25) is slidably housed in said conduit means (15).

4. Apparatus according to claim 3, wherein said supporting means (25) is shaped so as to enable the air and/or the gas to pass through said conduit means (15).

5. Apparatus according to claim 3 or 4, wherein said supporting means (25) comprises a plurality of pins, each of which is housed in a respective conduit of said conduit means (15).

6. Apparatus according to claim 5, wherein said pins (25) have a shaped cross section, in particular cross-shaped, so as to carry out one or more passages for the air and/or the gas inside the respective conduits (15).

7. Apparatus according to any preceding claim, wherein said supporting means (25) is maintained in said extended position (E) by respective elastic means (26).

8. Apparatus according to any preceding claim, wherein said supporting means (25) is positioned and maintained in said retracted position (R) by said second plate means (4) when said second plate means (4) presses said film (90) and said sheet (100) against said operating wall (20) in a second operating configuration (C).

9. Apparatus according to any preceding claim, wherein said operating wall (20) comprises at least a cavity (21) suitable for receiving a respective container (101).

10. Apparatus according to claim 9, wherein said cavity (21) comprises at least a vent (24) flowingly connected with an external environment by valve means, said valve means being selectively operatable for insulating said vent (24) from said external environment, or connecting said vent (24) to said external environment, respectively to enable air to be sucked from and/or gas to be led to said containers (101) or to enable a respective container (101) to be removed from said cavity (21) after welding together the film (90) and the sheet (100).

11. Apparatus according to any preceding claim, wherein said welding means (5) comprises at least a heated shaped ridge, in particular heated by electric resistances, said ridge being intended for pressing portions of said film (90) and said sheet (100) against a respective abutting element (23) of said first plate means (2).

12. Method for welding a covering film (90) superimposed on a sheet (100) made of thermoformable plastic material provided with a plurality of containers (101) thermoformed on said sheet (100), said method comprising the steps of:
- making on said sheet (100) a plurality of through holes (102) interposed between said containers (101);
- locking said film (90) to said sheet (100) along a peripheral portion that bounds an operating zone (T) of said sheet (100) comprising said containers (101)
- sucking air from and/or leading a gas to, said containers (101) in said operating zone (T) through said through holes (102) of said sheet (100);
- abutting on said film (90) and said sheet (100) with welding means (5) to weld portions of said film (90) to said sheet (100), in particular portions around openings of said containers (101);
- before said sucking of air and/or said leading a gas, inserting supporting means (25) through said through holes (102) for supporting said film (90) and maintaining said film (90) spaced away from said sheet (100) in said operating zone (T) so as to facilitate said sucking of air and/or said leading a gas.

13. Method according to claim 12, comprising retracting said supporting means (25) to enable said abutting on said film (90) and said sheet (100) by said welding means (5).

14. Method according to claim 12 or 13, comprising interrupting said sucking air and/or said leading said gas during said abutting on said film (90) and said sheet (100) by said welding means (5).

## Patentansprüche

1. Apparatur zum Schweißen eines Abdeckfilms (90) aufgesetzt auf eine Folie (100), die aus thermoformbarem Plastikmaterial gefertigt ist, das mit einer Vielzahl von Behältern (101) versehen ist, die auf der Folie (100) thermogeformt sind, aufweisend ein erstes Plattenmittel (2), das mit einer Arbeitswand (20) versehen ist, um die Folie (100) zu tragen, und ein zweites Plattenmittel (4), das mit einem Schweißmittel (5) versehen ist, um den Film (90) und die Folie (100) gegen die Arbeitswand (20) derart zu pressen, um den Film (90) an die Folie (100) zu schweißen, wobei die Folie (100) eine Vielzahl von Durchbrechungen (102) aufweist, die zwischen den Behältern (101) angeordnet sind, wobei das erste Plattenmittel (2) ein Leitungsmittel (5) aufweist, das auf der Arbeitswand (20) und den Durchbrechungen (102) verläuft, um Luft aus den Behältern (101) abzusaugen und/oder ein Gas diesen zuzuführen, wobei die Apparatur ferner ein Trägermittel (25) aufweist, das dem ersten Plattenmittel (2) zugeordnet ist und beweglich ist zwischen einer ausgefahrenen Position (E), in der das Trägermittel (25) von der Arbeitswand (20) derart hervorsteht, so dass es den Film (90) tragen und den Film (90) von der Folie (100) beabstandet halten kann, um das Absaugen der Luft aus den Behältern (101) und/oder das Zuführen eines Gas zu diesen zu erleichtern, und einer zurückgezogenen Position (R), in der das Trägermittel (25) im Wesentlichen im Inneren des ersten Plattenmittels (2) derart untergebracht ist, um dem ersten Plattenmittel (2) und dem zweiten Plattenmittel (4) zu ermöglichen, den Film (90) und die Folie (100) zusammen zu pressen und zu schweißen, und wobei sie ferner ein Verschlussmittel (3) aufweist, das zwischen dem ersten Plattenmittel (2) und dem zweiten Plattenmittel (4) angeordnet und eingerichtet ist, um den Film (90) gegenüber der Folie (100) in einer ersten Arbeitskonfiguration (B) entlang eines peripheren Teils, der einen Arbeitsbereich (T) der Folie (100) begrenzt, der die Behälter (101) aufweist, zu verschließen.

2. Apparatur gemäß Anspruch 1, wobei das Verschlussmittel (3) mit einem Dichtungsmittel (32) versehen ist, das angeordnet ist, um an den Film (90) anzugrenzen.

3. Apparatur gemäß Anspruch 1 oder 2, wobei das Trägermittel (25) gleitend in dem Leitungsmittel (15) untergebracht ist.

4. Apparatur gemäß Anspruch 3, wobei das Trägermittel (25) so geformt ist, um es der Luft und/oder dem Gas zu ermöglichen, durch das Leitungsmittel (15) hindurchzutreten.

5. Apparatur gemäß Anspruch 3 oder 4, wobei das Trägermittel (25) eine Vielzahl von Stiften aufweist, wobei jeder hiervon in einer entsprechenden Leitung des Leitungsmittels (15) untergebracht ist.

6. Apparatur gemäß Anspruch 5, wobei die Stifte (25) einen geformten Querschnitt, insbesondere kreuzförmig, aufweisen, derart, dass ein oder mehrere Durchtritte für die Luft und/oder das Gas in das Innere der jeweiligen Leitungen (15) realisiert werden.

7. Apparatur gemäß einem der vorherigen Ansprüche, wobei das Trägermittel (25) in der ausgefahrenen Position (E) durch entsprechende elastische Mittel (26) gehalten wird.

8. Apparatur gemäß einem der vorherigen Ansprüche, wobei das Trägermittel (25) in der zurückgezogenen Position (R) durch ein zweites Plattenmittel (4) positioniert und gehalten wird, wenn das zweite Plattenmittel (4) den Film (90) und die Folie (100) gegen die Arbeitswand (20) in einer zweiten Arbeitskonfiguration (C) presst.

9. Apparatur gemäß einem der vorherigen Ansprüche, wobei die Arbeitswand (20) zumindest eine Kavität (21) aufweist, die geeignet ist, um einen entsprechenden Behälter (101) aufzunehmen.

10. Apparatur gemäß Anspruch 9, wobei die Kavität (21) zumindest eine Öffnung (24) aufweist, die fließend mit einer äußeren Umgebung über Ventilmittel verbunden ist, wobei die Ventilmittel selektiv betätigbar sind, um die Öffnung (24) gegenüber der äußeren Umgebung zu isolieren bzw. die Öffnung (24) mit der äußeren Umgebung zu verbinden, um es zu ermöglichen, Luft von den Behältern (101) abzusaugen und/oder Gas diesen zuzuführen, oder um es zu ermöglichen, einen entsprechenden Behälter (101) von der Kavität (21) zu entfernen, nachdem der Film (90) und die Folie (100) zusammengeschweißt wurden.

11. Apparatur gemäß einem der vorherigen Ansprüche, wobei das Schweißmittel (5) zumindest eine erwärmte geformte Erhöhung aufweist, insbesondere erwärmt durch elektrische Widerstände, wobei die Erhöhung dafür vorgesehen ist, um Teile des Films (90) und der Folie (100) gegen ein jeweiliges Angrenzelement (23) des ersten Plattenmittels (2) zu pressen.

12. Verfahren zum Schweißen eines Abdeckfilms (90) aufgesetzt auf eine Folie (100), die aus thermoformbarem Plastikmaterial gefertigt ist, das mit einer Vielzahl von Behältern (101) versehen ist, die auf der Folie (100) thermogeformt sind, wobei das Verfahren folgende Schritte aufweist:
- Schaffen einer Vielzahl von Durchbrechungen (102) auf der Folie (100), die zwischen den Behältern (101) angeordnet sind;
- Verschließen des Films (90) gegenüber der Folie (100) entlang eines peripheren Teils, der einen Arbeitsbereich (T) auf der Folie (100) begrenzt, der die Behältern (101) aufweist,
- Absaugen von Luft aus den Behältern (101) und/oder Zuführen eines Gas zu diesen in dem Arbeitsbereich (T) durch die Durchbrechungen (102) der Folie (100);
- Angrenzen an den Film (90) und die Folie (100) mit einem Schweißmittel (5), um Teile des Films (90) an die Folie (100) zu schweißen, insbesondere Teile um Öffnungen der Behälter (101);
- vor dem Absaugen von Luft und/oder dem Zuführen eines Gases Einführen eines Trägermittels (25) durch die Durchbrechungen (102), um den Film (90) zu tragen und den Film (90) von der Folie (100) in dem Arbeitsbereich (T) beabstandet zu halten, um das Absaugen von Luft und/oder Zuführen eines Gases zu erleichtern.

13. Verfahren gemäß Anspruch 12, das das Zurückziehen des Trägermittels (25) aufweist, um das Angrenzen an den Film (90) und die Folie (100) durch das Schweißmittel (5) zu ermöglichen.

14. Verfahren gemäß Anspruch 12 oder 13, das das Unterbrechen des Absaugens der Luft und/oder des Zuführens des Gases während des Angrenzens an den Film (90) und die Folie (100) durch das Schweißmittel (5) aufweist.

## Revendications

1. Appareil pour le soudage d'un film de revêtement (90) superposé sur une feuille (100) de matière plastique thermoformable pourvue d'une pluralité de récipients (101) thermoformés sur ladite feuille (100), comprenant des premiers moyens formant plaque (2) pourvus d'une paroi d'actionnement (20) pour supporter ladite feuille (100) et de seconds moyens formant plaque (4) pourvus de moyens de soudage (5) pour presser ledit film (90) et ladite feuille (100) contre ladite paroi d'actionnement (20) afin de souder ledit film (90) à ladite feuille (100), ladite feuille (100) comprenant une pluralité de trous traversants (102) interposés entre lesdits récipients (101), lesdits premiers moyens formant plaque (2) comprenant des moyens de conduit (5) débouchant sur ladite paroi d'actionnement (20) au niveau desdits trous traversants (102) pour aspirer l'air en provenance de, et/ou acheminer un gaz vers, lesdits récipients (101), dans lequel l'appareil comprend en outre des moyens de soutien (25) associés auxdits premiers moyens formant plaque (2) et déplaçables entre une position sortie (E), dans laquelle lesdits moyens de soutien (25) se trouvent en saillie de ladite paroi d'actionnement (20) afin de supporter ledit film (90) et maintenir ledit film (90) à l'écart de ladite feuille (100) pour faciliter l'aspiration de l'air en provenance de et/ou l'acheminement d'un gaz vers lesdits récipients (101), et une position rentrée (R), dans laquelle lesdits moyens de soutien (25) sont substantiellement logés à l'intérieur desdits premiers moyens formant plaque (2) afin de permettre auxdits premiers moyens formant plaque (2) et auxdits seconds moyens formant plaque (4) de presser et souder l'un contre l'autre ledit film (90) et ladite feuille (100), et dans lequel il comprend en outre des moyens de serrage (3) interposés entre lesdits premiers moyens formant plaque (2) et lesdits seconds moyens formant plaque (4) et agencés pour plaquer ledit film (90) contre ladite feuille (100), dans une première configuration de fonctionnement (B), le long d'une portion périphérique délimitant une zone de fonctionnement (T) de ladite feuille (100) comprenant lesdits récipients (101).

2. Appareil selon la revendication 1, dans lequel lesdits moyens de serrage (3) sont pourvus de moyens d'étanchéité (32) agencés pour venir en action d'appui contre ledit film (90).

3. Appareil selon les revendications 1 ou 2, dans lequel lesdits moyens de soutien (25) sont logés de façon coulissante dans lesdits moyens de conduit (15).

4. Appareil selon la revendication 3, dans lequel lesdits moyens de soutien (25) sont formés pour permettre à l'air et/ou au gaz de passer à travers lesdits moyens de conduit (15).

5. Appareil selon les revendications 3 ou 4, dans lequel lesdits moyens de soutien (25) comprennent une pluralité de broches, chacune étant logée dans un conduit respectif desdits moyens de conduit (15).

6. Appareil selon la revendication 5, dans lequel lesdites broches (25) ont une section transversale de forme particulière, notamment en forme de croix, afin de fournir un ou plusieurs passages pour l'air et/ou pour le gaz dans les conduits respectifs (15).

7. Appareil selon l'une quelconque des revendications précédentes, dans lequel lesdits moyens de soutien (25) sont maintenus dans ladite position sortie (E) par des moyens élastiques respectifs (26).

8. Appareil selon l'une quelconque des revendications précédentes, dans lequel lesdits moyens de soutien (25) sont positionnés et maintenus dans ladite position rentrée (R) par lesdits seconds moyens formant plaque (4) lorsque lesdits seconds moyens formant plaque (4) pressent ledit film (90) et ladite feuille (100) contre ladite paroi d'actionnement (20) dans une seconde configuration de fonctionnement (C).

9. Appareil selon l'une quelconque des revendications précédentes, dans lequel ladite paroi d'actionnement (20) comprend au moins un évidement (21) approprié pour recevoir un récipient respectif (101).

10. Appareil selon la revendication 9, dans lequel ledit évidement (21) comprend au moins un évent (24) en communication fluidique avec un environnement externe par un moyen de valve, ledit moyen de valve étant actionnable de façon sélective pour isoler ledit évent (24) dudit environnement externe, ou pour relier ledit évent (24) audit environnement externe, respectivement pour permettre l'aspiration de l'air en provenance de et/ou l'acheminement d'un gaz vers lesdits récipients (101) ou pour permettre l'extraction d'un récipient respectif (101) dudit évidement (21) après soudage l'un à l'autre du film (90) et de la feuille (100).

11. Appareil selon l'une quelconque des revendications précédentes dans lequel lesdits moyens de soudage (5) comprennent au moins une crête formée et chauffée, en particulier chauffée par des résistances électriques, ladite crête étant conçue pour presser des portions dudit film (90) et de ladite feuille (100) contre un élément respectif d'appui (23) desdits premiers moyens formant plaque (2).

12. Méthode pour le soudage d'un film de revêtement (90) superposé sur une feuille (100) de matière plastique thermoformable pourvue d'une pluralité de récipients (101) thermoformés sur ladite feuille (100), ladite méthode comprenant les étapes consistant à:
- pratiquer sur ladite feuille (100) une pluralité de trous traversants (102) interposés entre lesdits récipients (101);
- plaquer ledit film (90) contre ladite feuille (100) le long d'une portion périphérique qui délimite une zone de fonctionnement (T) de ladite feuille (100) comprenant lesdits récipients (101)
- aspirer l'air en provenance de et/ou acheminer un gaz vers, lesdits récipients (101) dans ladite zone de fonctionnement (T) à travers lesdits trous traversants (102) de ladite feuille (100);
- venir en action d'appui contre ledit film (90) et ladite feuille (100) avec des moyens de soudage (5) pour souder des portions dudit film (90) à ladite feuille (100), en particulier les portions autour des ouvertures desdits récipients (101);
- avant ladite aspiration d'air et/ou ledit acheminement d'un gaz, insérer des moyens de soutien (25) à travers lesdits trous traversants (102) pour supporter ledit film (90) et maintenir ledit film (90) à l'écart de ladite feuille (100) dans ladite zone de fonctionnement (T) afin de faciliter ladite aspiration de l'air et/ou ledit acheminement d'un gaz.

13. Méthode selon la revendication 12, comprenant le retrait desdits moyens de soutien (25) pour permettre ladite action d'appui contre ledit film (90) et ladite feuille (100) par lesdits moyens de soudage (5).

14. Méthode selon les revendications 12 ou 13, comprenant l'interruption de ladite aspiration d'air et/ou dudit acheminement dudit gaz pendant ladite action d'appui contre ledit film (90) et ladite feuille (100) par lesdits moyens de soudage (5).
